# EUROPEAN PATENT APPLICATION

(11) **EP 4 742 396 A1**
(43) Date of publication of application: **13.05.2026**
(21) Application number: 24211474.2
(22) Date of filing: 07.11.2024
(51) Int. Cl.: H01M 50/236, H01M 50/242

(54) **BATTERY SUPPORT STRUCTURE**

(71) Applicant: Röchling Automotive SE, 68165 Mannheim (DE)
(72) Inventor: Neuhaus, Jonas, 30314 Frankfurt am Main (DE); Dahl, Erik, 64285 Darmstadt (DE); Grebel, Karsten, 68642 Bürstadt (DE)
(74) Representative: Ullrich & Naumann PartG mbB

(57) **Abstract**

The present invention relates to a battery support structure, comprising a lower part, in particular adapted as underrun protection, an upper part, in particular adapted as battery cell holder, and a load transfer structure between the two parts, wherein the load transfer structure comprises a first element and a second element, wherein the first element is arranged below the second element and is connected to the lower part and wherein one of the elements, preferably the first element, has a higher shear modulus and/or higher Young's modulus than the other element, preferably the second element, and has a higher shear modulus and/or higher Young's modulus than the second element and wherein the first element is arranged such that a force from the lower part is transmitted via the first element to the second element and from the second element to the upper part.

## Description

The invention relates to a battery support structure, comprising a lower part, in particular adapted as underrun protection, an upper part, in particular adapted as battery cell holder, and a load transfer structure between the two parts, wherein the load transfer structure comprises a first element and a second element.

The invention further relates to a battery comprising at least one battery cell arranged in a battery support structure.

Battery support structures are used to give battery cells stability in terms of forces or load acting on the battery cells. In particular forces acting upon the battery cells for instance in case of an underrun event should be distributed and transferred such that the mechanical load carrying capacity of each cell is used to a large extent to avoid damage.

DE 10 2022 116 978 B3 shows an underrun protection device for a battery electric vehicle, with a sandwich arrangement comprising a core layer arranged between an upper cover layer and a lower cover layer made of a fiber-reinforced plastic material. Ribs are arranged on the top cover layer, which ribs are connected to the top cover layer in a material-locking manner, wherein the ribs arranged on the top cover layer are each surrounded by a top layer, which is connected to the top cover layer in a material-locking manner at two retaining sections.

One of the problems however is that overloading can not efficiently be prevented due to the stiffness of the ribs. Further due to the usually limited deformation space the mechanical performance of the underrun can not fully utilized.

One of the objectives of embodiments of the present invention is therefore to provide a battery support structure and a battery with a battery support structure having an enhanced mechanical performance, enable an efficient transfer of forces and load such that the load carrying capacity of each cell is used to a larger extent.

One of the further objectives of embodiments the present invention is therefore to provide an alternative battery support structure and an alternative battery with a battery support structure.

In an embodiment the present invention solves the afore-mentioned objectives by a battery support structure, comprising a lower part, in particular adapted as underrun protection, an upper part, in particular adapted as battery cell holder, and a load transfer structure between the two parts, wherein the load transfer structure comprises a first element and a second element, wherein the first element is arranged below the second element and is connected to the lower part and wherein one of the elements, preferably the first element, has a higher shear modulus and/or higher Young's modulus than the other element, preferably the second element, and has a higher shear modulus and/or higher Young's modulus than the second element and wherein the first element is arranged such that a force from the lower part is transmitted via the first element to the second element and from the second element to the upper part.

In an embodiment, the present invention solves the afore-mentioned objectives by a battery comprising at least one battery cell arranged in a battery support structure according to one of the claims 1-14.

One of the advantages is that an optimized mechanical performance of the battery support structure can be achieved. A further advantage is that the probability for a damage due to mechanical overload can be reduced. An even further advantage is that a simple and cost-effective manufacturing can be provided.

Further features, advantages and preferred embodiments are disclosed or may become apparent in the following.

According to a preferred embodiment of the invention, the upper part and the first element are adapted for an at least partial form-fit engagement. In case of load event, the upper part for instance extends into the first element allowing a secure guiding.

According to a further preferred embodiment of the invention the upper part comprises at least one protrusion, which is engageable in a corresponding reception structure of the first element upon load, preferably wherein the reception structure is provided in form of one or more U-shaped ribs. This allows in a simple and effective way a form-fit engagement for secure guiding and transfer of shear load in case of a load event.

According to a further preferred embodiment of the invention, the upper part comprises at least one protrusion, which is engaged in a corresponding reception structure of the first element, preferably wherein the reception structure is provided in form of one or more U-shaped ribs. One of the advantages is a reliable transfer of shear loads even in the case of a low load event. The ribs may have any form, in particular a different form than being U-shaped.

According to a further preferred embodiment of the invention, the second element comprises at least one of an elastomer, preferably a thermoplastic elastomer, silicone, preferably liquid silicone rubber, LSR, nitrile butadiene rubber, NBR. This allows a cost-effective manufacturing of the second element and a sufficient damping upon a load event.

According to a further preferred embodiment of the invention, the second element is provided as a foamed and/or non-foamed element. This allows an easy and flexible way to adapt the second element according to use requirements. Foamed elements are more flexible and are light-weight whereas non-foamed elements provide a greater stiffness.

According to a further preferred embodiment of the invention, the first element comprises at least one opening. One of the advantages is that upon a thermal runaway event gases could be discharged via the opening. Further, material can be saved, which reduces costs.

According to a further preferred embodiment of the invention, the first element is ring-shaped. This allows an adaption of the first element to cylindrical shaped battery cells providing an enhanced support for these battery cells in case of a load event.

According to a further preferred embodiment of the invention, a plurality of openings is provided, in particular symmetrically to an axis of the ring-shaped first element. This allows gases upon a thermal runaway event could be discharged via the openings, for instance in different directions, or to provide a venting channel over a plurality of openings for secure discharging of gases.

According to a further preferred embodiment of the invention the first element comprises at least two regions having a different thickness, in particular in case of a ring-shaped first element the at least two regions have different diameters. This allows for providing the first element for different load configurations in different directions.

According to a further preferred embodiment of the invention a plurality of load transfer structures is provided, preferably for each battery cell a load transfer structure is provided. One of the advantages is that a reliable load transfer in particular for a plurality of battery cells is provided.

According to a further preferred embodiment of the invention at least two of the load transfer structures are connected with each other, preferably wherein the first elements of said at least two load transfer structures are connected with each other. On the one hand, this allows for a simple and cost effective manufacturing, on the other hand, load can be even more effectively transferred.

According to a further preferred embodiment of the invention said plurality of load transfer structures are formed such to provide at least one venting channel, preferably a plurality of venting channels, in particular wherein at least two of the venting channels are formed parallel to each other. This allows for an easy overall discharging of gases in case of a thermal runaway event of one or more battery cells avoiding damage of neighbouring battery cells.

According to a further preferred embodiment of the invention the first element and/or the second element are injection-molded. This allows a simple and cost-effective manufacturing of the first or second element.

There are several ways how to design and further develop the teaching of the present invention in an advantageous way. To this end, it is to be referred to the patent claims subordinate to the independent patent claims on the one hand and to the following explanation of preferred examples of embodiments of the invention, illustrated by the drawings on the other hand. In connection with the explanation of the preferred embodiments of the invention by the aid of the drawings, generally preferred embodiments and further developments of the teaching will be explained.

In the drawings
- Fig. 1: shows a battery support structure according to an embodiment of the present invention in case of no load;
- Fig. 2: shows the battery support structure of Figure 1 in case of a mid load level; and
- Fig. 3: shows a battery support structure according to an embodiment of the present invention; and
- Fig. 4: shows first elements of a battery support structure according to an embodiment of the present invention.

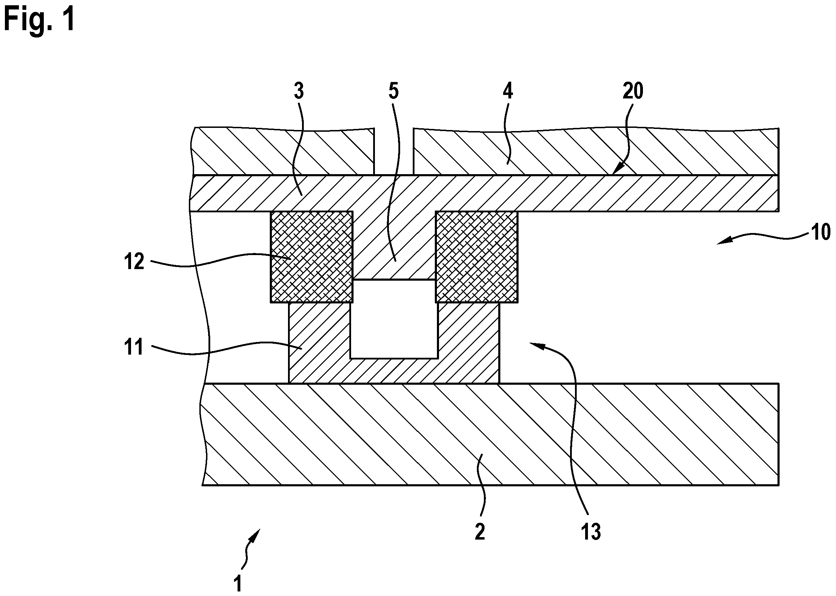

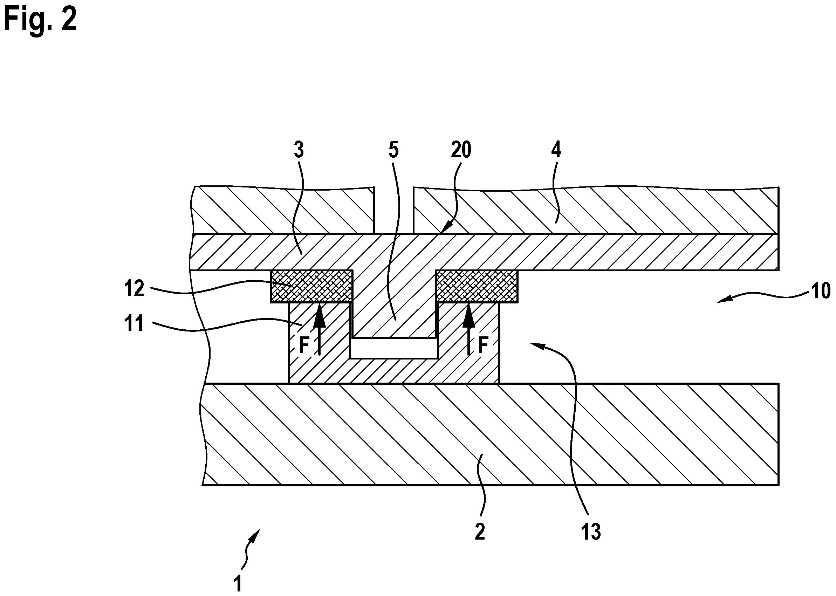

Figure 1 shows a battery support structure according to an embodiment of the present invention in case of no load and Figure 2 shows the battery support structure of Figure 1 in case of a mid load level.

Figures 1 and 2 show a battery support structure 1 in a cross-sectional view comprising an underrun protection 2 at the bottom. On top of the underrun protection 2 a U-shaped rib 11 is provided, providing from the top a reception 13 for a protrusion 5 of a battery cell holder 3 extending in the direction of the rib 11 and adapted for engaging into the reception 13. On top of the vertical legs of the rib 11 and at least in part around the protrusion 5 a foamed element 12 is arranged.

If a load acts onto the underrun protection 2, as shown in Figure 2, the foamed element 12 is reversibly compressed and the protrusion 5 extends partially between the two legs of the rib 11 - providing a partial form-fit connection 20 - , for instance to transfer shear loads between the underrun protection 2 and the battery cell holder 3. If the load is reduced the foamed element 12 decompresses and the battery cell structure 1 returns to the state according to Figure 1.

The partial-form fit connection 20 can in a further embodiment also be provided in a no-load-scenario according to Figure 1 either by providing a larger protrusion such that the protrusion 5 extends already between the legs of the rib 11 even if no load is present or by reducing the thickness of the foamed element 12 or by combination of both.

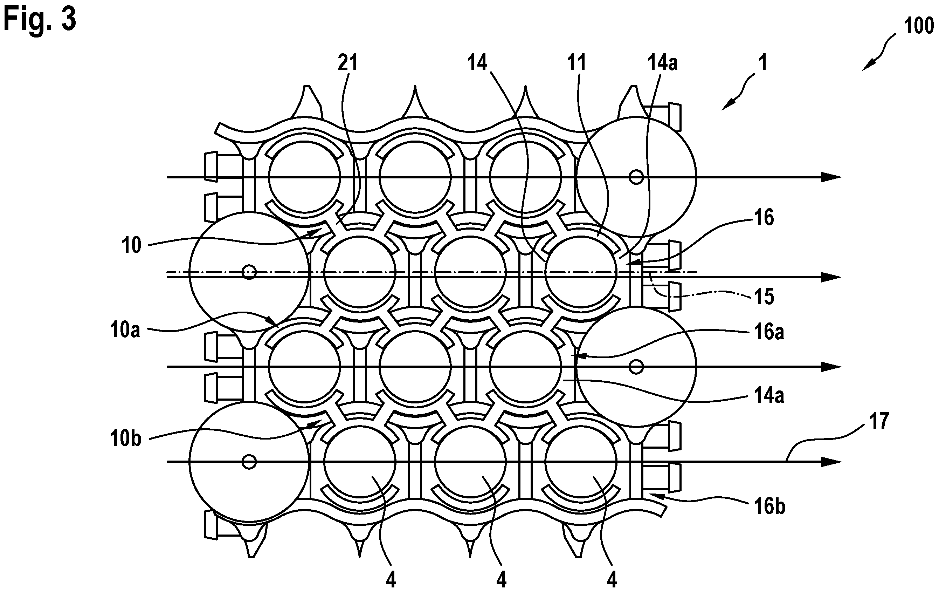

Figure 3 shows a battery support structure according to an embodiment of the present invention.

In Figure 3, a battery 100 with a battery support structure 1 is shown along the view direction of the axes of cylindrical battery cells 4. The battery support structure 1 is preferably adapted according to the battery support structure of the Figures 1 and 2 and comprises here a plurality of adjacent load transfer structures 10, 10a, 10b. The ribs 11 of the battery support structure 1 of Figure 3 are ring-shaped having on opposite sides an opening 14, 14a in the horizontal layer of the ribs 11. The openings 14, 14a of adjacent ribs 11 from the left side to the right side are symmetric to the center axes 15 of the battery cells 4 arranged above (see Figure 1) the ribs 11. Therefore the openings 14, 14a of the ribs 11 form venting channels 16, 16a, 16b allowing a flow (flow direction 17) of gases for instance in case of an underrun event.

The ribs 11 of adjacent rows (from left to right in Figure 3) of battery cells 4 are connected with each other via diagonal connections 21.

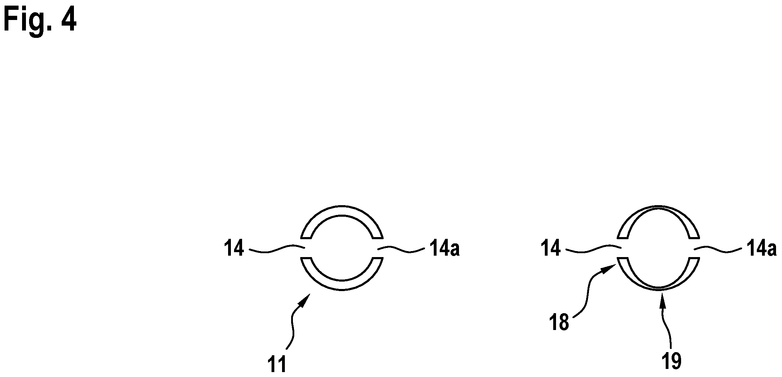

Figure 4 shows first elements of a battery support structure according to an embodiment of the present invention.

The first elements 11 in Figure 4 shown in top view are ring-shaped with two openings 14, 14a of opposite sides. The ring-shaped element 11 on the left side of Figure 4 has a constant thickness along the circumference, whereas the ring-shaped element 11 on the right side of Figure 4 has a lower thickness in the areas 19 perpendicular to the area 18 of openings 14, 14a.

At least one embodiment may provide at least one of the following features and/or at least one of the following advantages:
- Efficient and reliable load transfer.
- Simple and cost-effective manufacturing.
- Increased utilization level of mechanical performance, in particular in limited deformation space.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Battery support structure
- 2: Lower part/ Underrun protection
- 3: Upper part/ Battery cell holder
- 4: Battery cell
- 5: Protrusion
- 10, 10a, 10b: Load transfer structure
- 11: First element
- 12: Second element
- 13: Reception structure
- 14, 14a: Opening
- 15: Symmetry axis
- 16, 16a, 16b: Venting channel
- 17: Flow
- 18, 19: Region
- 20: Partial form-fit connection
- 21: Connection
- 100: Battery

## Claims

1. Battery support structure (1), comprising
a lower part (2), in particular adapted as underrun protection,
an upper part (3), in particular adapted as battery cell holder, and
a load transfer structure (10) between the two parts (2, 3), wherein the load transfer structure (10) comprises
a first element (11) and a second element (12), wherein the first element (11) is arranged below the second element (12) and is connected to the lower part (2) and wherein one of the elements (11, 12), preferably the first element (11), has a higher shear modulus and/or higher Young's modulus than the other element (11, 12), preferably the second element (3), and wherein the first element (11) is arranged such that a force from the lower part (2) is transmitted via the first element (11) to the second element (12) and from the second element (12) to the upper part (3).

2. Battery support structure according to claim 1, **characterized in that** the upper part (3) and the first element (11) are adapted for an at least partial form-fit engagement (20).

3. Battery support structure according to claim 2, **characterized in that** the upper part (3) comprises at least one protrusion (5), which is engageable in a corresponding reception structure (13) of the first element (11) upon load, preferably wherein the reception structure (13) is provided in form of one or more U-shaped ribs.

4. Battery support structure according to claim 2, **characterized in that** the upper part (3) comprises at least one protrusion (5), which is engaged in a corresponding reception structure (13) of the first element (2), preferably wherein the reception structure is provided in form of one or more U-shaped ribs.

5. Battery support structure according to one of the claims 1-4, **characterized in that** the second element (12) comprises at least one of an elastomer, preferably a thermoplastic elastomer, silicone, preferably liquid silicone rubber, LSR, nitrile butadiene rubber, NBR.

6. Battery support structure according to claim 5, **characterized in that** the second element (12) is provided as a foamed and/or non-foamed element.

7. Battery support structure according to one of the claims 1-6, **characterized in that** the first element (11) comprises at least one opening (14).

8. Battery support structure according to one of the claims 1-7, **characterized in that** the first element (11) is ring-shaped.

9. Battery support structure according to claims 7 and 8, **characterized in that** a plurality of openings (14, 14a) is provided, in particular symmetrically to an axis of the ring-shaped first element (11).

10. Battery support structure according to claims 1-9, **characterized in that** the first element (11) comprises at least two regions (18, 19) having a different thickness, in particular in case of a ring-shaped first element (11) the at least two regions (18, 19) have different diameters.

11. Battery support structure according to one of the claims 1-10, **characterized in that** a plurality of load transfer structures (10, 10a, 10b) is provided, preferably for each battery cell (4) a load transfer structure (10, 10a, 10b) is provided.

12. Battery support structure according to claim 11, **characterized in that** at least two of the load transfer structures (10a, 10b) are connected with each other, preferably wherein the first elements (11) of said at least two load transfer structures (10a, 10b) are connected with each other.

13. Battery support structure according to one of the claims 11-12, **characterized in that** said plurality of load transfer structures (10, 10a, 10b) are formed such to provide at least one venting channel (16), preferably a plurality of venting channels (16, 16a, 16b), in particular wherein at least two of the venting channels (16, 16a, 16b) are formed parallel to each other.

14. Battery support structure according to one of the claims 1-13, **characterized in that** the first element (11) and/or the second element (12) is injection-molded.

15. Battery (100) comprising at least one battery cell (4) arranged in a battery support structure (10, 10a, 10b) according to one of the claims 1-14.
